# EUROPEAN PATENT APPLICATION

(11) **EP 4 197 861 A1**
(43) Date of publication of application: **21.06.2023**
(21) Application number: 22211433.2
(22) Date of filing: 05.12.2022
(51) Int. Cl.: B60R 13/00, B60R 21/215, B60R 21/2165, C09J 5/00

(54) **PROCESS FOR FIXING AN EMBLEM ON A COVER OF A MOTOR-VEHICLE STEERING WHEEL**

(30) Priority: 06.12.2021 IT 202100030791
(71) Applicant: SPM S.p.A., 21030 Brissago Valtravaglia (IT)
(72) Inventor: BERUTTI, Giovanni, BRISSAGO VALTRAVAGLIA (IT); BERUTTI, Stefano, BRISSAGO VALTRAVAGLIA (IT)
(74) Representative: Colombo, Stefano Paolo

(57) **Abstract**

a process for fixing an emblem (10) on a cover of a motor-vehicle steering wheel, which comprises the steps of:
a) loading a plurality of emblems and a plurality of covers inside a fixing machine, wherein each emblem comprises a visible surface and a rear surface and wherein each cover comprises an external surface and an internal surface;
b) providing an amount of glue for fixing an emblem to a cover;
c) depositing the amount of glue on a rear surface of each emblem and/or on each external surface of the covers, in the form of a bead along a predetermined path;
d) joining an emblem to a corresponding cover;
e) pressing together each pair of emblem and cover.

The present invention also relates to a cover of a motor-vehicle steering wheel comprising an emblem glued to it by means of this process.

## Description

### FIELD OF THE INVENTION

The present invention relates in general to the automotive sector. In particular, the present invention relates to the sector of the production of covers for motor-vehicle steering wheels.

In particular, the present invention relates to a process for fixing an emblem, for example an emblem bearing the trademark of the motor-vehicle manufacturer, onto a cover of a motor-vehicle steering wheel. The present invention also relates to a cover of a motor-vehicle steering wheel comprising an emblem glued to it by means of this process.

### PRIOR ART

The steering wheel of a motor vehicle typically has a central part. This central part is typically called a cover.

A cover of the steering wheel has a visible surface on which an emblem is positioned, said emblem for example reproducing the trademark of the motor-vehicle manufacturer or the trademark of the vehicle model. The cover is shaped so that it covers the driver airbag system which is designed to be activated in the event of a collision.

Typically, the cover has two pre-weakened lines which, when the airbag is activated, allows the plastic to be broken and the partial opening of a compartment from which the protective bag is expelled. The aforementioned emblem is positioned on the portion of the cover, called flap, which can be opened.

The flap must necessarily remain attached to the rest of the cover and the emblem must remain attached thereto. Otherwise, at the moment when the airbag is opened, these parts would be expelled with force and risk causing injury to the occupants of the vehicle.

It is therefore essential, in order to prevent the emblem from becoming detached from the cover during inflation of the airbag, that the emblem should be firmly and safely fixed to the cover.

The emblems for steering wheels, depending on the tradename and the style required by the design, may be of different types: i.e. made of aluminium (from sheets), plastic, aluminium and plastic, or pressed aluminium.

In all four types listed above the assembly of the emblem on the steering-wheel cover is performed by passing fixing elements formed on the emblem through holes formed in the cover and fastening these fixing elements at the rear.

If the emblem is made of aluminium, it has perimetral legs which, once they have been passed through the holes in the cover, are folded over and fixed by melting the plastic over the aluminium by means of ultrasound or hot-riveting.

If the emblem is made of plastic, pins are formed on the rear thereof and, after being passed through the holes in the cover, they are melted so as to create "swellings" which retain the emblem during inflation.

If, for technical or design reasons, it is not possible to make an aluminium emblem with legs, the emblem must be mounted on a plastic base-piece. The production process therefore involves fixing the aluminium element to the base-piece and then fixing the base-piece to the cover by melting the pins, as described above for the emblems made of plastic. A method of this type is for example disclosed in US2007035111.

If, finally, the emblem has a main support body made of pressed aluminium, fixing must be performed by means of one or more pins which, after passing through the cover, are mechanically riveted and allow the gripping action to be achieved owing to the presence of washers more or less friction-mounted on said pin.

### SUMMARY OF THE INVENTION

The Applicant has noted that the assembly processes known in the art and described above nevertheless have a number of drawbacks. Firstly, they result in constraints on the design of both the emblems and the flaps and covers which may be used.

Furthermore, in order to perform fixing of the emblem at the rear of the cover, the latter must be made with suitable thicknesses, and this therefore increases both the rear dimensions, reducing the amount of space available for the airbag system, as well as the overall weight of the cover.

Finally, the processes known in the art are time-consuming, inefficient, and costly.

The Applicant has defined the aim of developing a process for fixing an emblem on a cover of a motor-vehicle or vehicle steering wheel which is able to overcome, at least partly, the drawbacks of the processes of the prior art, as described above.

In particular, the Applicant has defined the aim of developing a process which may be applied to any type of emblem among those typically used in the art and which allows the production of emblems and covers of various types without specific constructional constraints resulting from said process.

Advantageously, said process should also allow minimization of the impact which fixing of the emblem has on the overall weight and rear dimensions of the cover.

Furthermore, the Applicant has defined the aim of developing a process which is more efficient and economically advantageous than those which are known in the art and which, once optimized, allows reproducible results to be achieved, minimizing the need to carry out post-production checks on each part.

The Applicant has found that it is possible to achieve substantially irreversible fixing of an emblem, irrespective as to the material from which it is made, to a cover using an optimized gluing process in which the type of glue, the quantity used, and the method of application are carefully controlled.

Therefore, according to a first aspect, the present invention relates to a process for fixing an emblem on a cover of a motor-vehicle steering wheel, which comprises the steps of:
a) loading a plurality of emblems (10) and a plurality of covers inside a fixing machine, wherein each emblem (10) comprises a visible surface and a rear surface and wherein each cover comprises an external surface and an internal surface;
b) providing an amount of glue for fixing an emblem (10) to a cover;
c) depositing the amount of glue on a rear surface of each emblem (10) and/or on each external surface of the covers, in the form of a bead along a predetermined path;
d) joining an emblem (10) to a corresponding cover;
e) pressing together each pair of emblem (10) and cover.

According to embodiments, the bead of glue is defined by a continuous line comprising a plurality of segments.

According to embodiments, the bead of glue is defined by a continuous line which does not form a closed loop.

According to embodiments, the distance between each end (A, B) of the bead of glue and the portion of the bead closest to it is preferably equal to at least the width of the bead of glue itself.

According to embodiments, the bead of glue follows a path which is at least partially substantially parallel to the perimeter of the emblem (10). Preferably, the bead of glue along the whole of its path is placed at a distance from the edge of emblem (10) equal to at least the width of said bead.

According to embodiments, the bead of glue follows a path which comprises at least one section substantially parallel to an imaginary straight line (C) passing through the centre (O) of the emblem (10).

According to embodiments, the covers and the emblems (10) are made using the same material or using materials different from each other. Preferably, the emblems (10) are produced using materials selected from thermoplastic polyolefins (TPO), mixtures of polycarbonate (PC) and acrylonitrile-butadiene-styrene (ABS) copolymers, polycarbonate, aluminium, copper, acrylonitrile-butadiene-styrene copolymers, polyamide (Pa), polyester-polyether block thermoplastic elastomers, and mixtures thereof; while the covers are produced using materials selected from thermoplastic polyolefins (TPO), reinforced polystyrene (TPS), vulcanized thermoplastic elastomers (TPV), and mixtures thereof.

According to embodiments, the glue is selected from the group comprising monocomponent glues based on modified silane polymers, bicomponent epoxy glues, bicomponent acrylic glues, monocomponent hydro-hardening glues, and mixtures thereof.

According to embodiments, the process also comprises a step of pre-treatment of the surfaces to be glued. Preferably, the pre-treatment step involves one or more of the following treatments: priming, flaming, plasma treatment, mechanical cleaning, and cleaning with alcohol or solvents.

According to a further aspect, the present invention relates to a cover of a motor-vehicle steering wheel comprising an emblem (10) glued to it by means of the process described above. In particular, the present invention relates to a cover of a motor-vehicle steering wheel comprising an emblem (10) fixed to it by means of gluing of the rear surface of said emblem (10) onto a portion of the external surface of said cover. Advantageously, no element (other than the adhesive or glue) is provided between the emblem and the steering wheel cover.

### BRIEF DESCRIPTION OF THE FIGURES

The present invention will become completely clear from the following detailed description, provided by way of a non-limiting example, to be read with reference to the attached drawings in which:
- Figures 1, 3, 5, 7 and 9 show schematic designs of emblems (10.1 - 10.5) and associated glue patterns according to embodiments of the present invention;
- Figures 2, 4, 6, 8 and 10 show photos of the rear of the emblems with the residual glue left on them following destructive tests designed to separate them from the respective cover, corresponding to the designs shown in Figures 1, 3, 5, 7 and 9, respectively.

### DETAILED DESCRIPTION OF THE INVENTION

The first step of the process according to the present invention is that of loading the emblems (10) and the covers in the machine (step a). This step is performed using methods known in the art depending on the types of machines used. For example, loading may be performed by means of belts which are fed manually and then managed using robots with viewing systems or using pre-formed trays which contain the covers and the emblems (10) to be loaded.

The covers, and therefore the flaps, which are useful for the purposes of the present invention may be produced for example using thermoplastic polyolefins (TPO), reinforced polystyrene (TPS), vulcanized thermoplastic elastomers (TPV) and mixtures thereof. The surface of the cover, including also that of the flap, may be painted and in this case the glues must be suitable for adhering to the paint.

The emblems (10) useful for the purposes of the present invention may be produced for example using thermoplastic polyolefins (TPO), mixtures of polycarbonate (PC) and acrylonitrile-butadiene-styrene (ABS) copolymers, polycarbonate, aluminium, copper, acrylonitrile-butadiene-styrene copolymers, polyamide (Pa), polyester-polyether block thermoplastic elastomers, for example TPC-ET composed of a crystalline segment of polybutylene terephthalate and an amorphous segment based on a long chain of polyether and/or polyester glycols, and mixtures thereof.

In embodiments, the process according to the present invention also comprises a step of pre-treating the surfaces to be glued, intended to prepare them for gluing and to maximize the performance of the glue used. The pre-treatment comprises treatments for deep-cleaning and/or activation of the surface which may be selected from among: priming, flaming, plasma treatment, mechanical cleaning, or cleaning with alcohol or solvents. In some embodiments, the pre-treatment step involves two or more of the treatments listed above.

The application of the primer consists in the deposition of a layer of paint (primer) on the surface to be glued, which facilitates said gluing operation.

Flaming is an operation which is performed using gas torches which irradiate heat onto the surface of the plastic, increasing the wettability thereof and consequently the adherence of the glues. The same process may be performed using plasma, in which case it is referred to as plasma treatment.

The cleaning operation, whether it is mechanical, i.e. performed using brushes which rotate or rub the surface of the parts in order to physically remove the impurities, or chemical, using alcohol or other solvents, helps improve the adhesion of the glue to the surface.

The amount of glue to be used for each pair of emblems (10) and covers is defined by means of a system for optimization of the process conditions, depending, for example, on the shapes and the materials of the specific emblems and covers to be used. Advantageously, the process according to the present invention allows to obtain results which are highly reproducible in terms of positioning of the emblem on the cover, fixing force, in relation to the requirements of the automobile industry, etc.

Therefore, during step b) of the process according to the present invention, the glue is provided in the amounts established during optimization and during step c) is then deposited on the surfaces to be glued in the form of a bead with controlled shape and dimensions and along a predetermined path.

In the present description and in the attached claims, the term "bead" is used to describe a substantially tubular-shaped distribution of the glue with a substantially uniform volume at all the points of the bead.

In embodiments, the deposition of the glue is performed via nozzles and systems which are able to ensure a constant volume thereof. These systems are mounted on robotic arms which allow the metering to be synchronized with the movement so as to reproduce exactly and in a constant manner over time the same bead of glue in terms of both shape and volume.

The type of glue and the shape and the dimensions of the bead to be applied are precisely selected taking into account various parameters. In particular, the following aspects must be ensured:
- workability of the parts which have just been glued;
- optimum static and dynamic grip, making gluing resistant to the forces exerted by inflation of the airbag;
- the aforementioned characteristics must be maintained at extreme temperatures (-35°C to +85°C) and after forced-ageing laboratory cycles;
- the glue must not be visible on the assembled part; and
- when the two elements, emblem and flap, are forcibly separated, the glue must be present on both parts.

The glues are specifically chosen depending on the materials to be joined together. In embodiments, the emblems and the covers may be produced using similar materials, for example thermoplastic polyolefins (TPO) or polycarbonate, or may be produced using materials which are completely different, for example when emblems made of aluminium are assembled on covers made using thermoplastic polyolefins.

The glues which are useful for the purposes of the invention may be monocomponent or bicomponent glues of varying nature such as monocomponent glues based on modified silane polymers, bicomponent epoxy glues, bicomponent acrylic glues, monocomponent hydro-hardening glues and mixtures thereof.

The bead of glue is preferably defined by a continuous line which does not form a closed loop. In embodiments, the continuous line may comprise a plurality of segments. The distance between each end (A, B) of the bead of glue and the portion of the bead closest to it is preferably equal to at least the width of the bead of glue itself.

In embodiments, the bead of glue follows a path which is at least partly substantially parallel to the perimeter of the emblem (10), preferably without touching the edge of the emblem (10). More preferably, the bead of glue is deposited at a distance from the edge of emblem (10) equal to at least the width of said bead.

In particular embodiments in which the emblem (10) has a geometry characterized by a ratio between the greater dimension and the smaller dimension equal to about 1, preferably between 0.8 and 1.2, the bead of glue follows a path which comprises at least one section substantially parallel to an imaginary straight line (C) passing through the centre (O) of the emblem.

The step d) of joining together the emblems (10) and the covers must be very precise: the permitted position tolerances are a few tenths of a millimetre.

The emblems (10) may have symmetrical or non-symmetrical shapes and may have or not have a seat. In the case non-symmetrical shapes, the joining operation is simplified by the possibility of mechanical centring and in some cases by the presence of a housing which limits the possibility of incorrect positioning of the part. The joining operation involving symmetrical shapes must instead be guided by viewing systems which perfectly position the emblem in the correct position.

It is however necessary to ensure that the orientation of the emblem (10) with respect to the imprint or decoration on its surface is correct.

In the case of both symmetrical and non-symmetrical emblems which do not have a seat which ensures positioning, this must be ensured by the production system and controlled with optical measurement and viewing systems using telecameras with special software.

During the step e) of pressing each pair of emblems (10) and covers, the walls of the glued parts must be pressed with a force and for a duration designed to ensure the strength of the joint owing to the correct alignment of the surfaces and compression of the bead of glue. The pressing force must not negatively affect the positioning and orientation of the part.

Therefore, at the end of the process according to the present invention, it is possible to obtain a cover for a motor-vehicle steering wheel comprising an emblem fixed to it by means of gluing of the rear surface of the emblem onto a portion of the external surface of the cover. In particular, the emblem is glued directly onto the cover: the portion of the external surface of the cover in fact forms an integral part of said cover, forming a single body with it.

As is clear from the description of the aforementioned method, the emblem is stably fixed to the cover without the need to use any type of pin or rivet and therefore without the need to form holes in the surface of the cover. No element (other than the adhesive or glue) is provided between the emblem and the steering wheel cover.

The covers provided with emblems (10) thus produced are subjected to thorough checks such as:
- position checks: the individual parts must be combined respecting the dimensional tolerances of the assembled part, both as regards the positional geometry and as regards the position of the decorative design. These checks are carried out using telecameras and special software;
- shape and size of the bead of glue, by means of telecameras and special software or 3D scanners;
- amount of glue;
- appearance checks, by means of high-definition telecameras and neural-network software.

At the end of these checks the covers considered to be acceptable are separated from those which instead have not complied with the production standards.

In embodiments of the invention, the process further comprises a step during which the cover already equipped with an emblem (10) is provided with a primary key, for example a sequential number, a bar code or a QR code, able to make available all the results of the checks (images, scanners, measurements, weights, etc.), for example by referring to a database.

Advantageously, the process according to the present invention involves a check of the strength of the glued joint, performed statistically on samples removed during production since it consists of a destructive test.

This test involves the cover being fixed to a part of the machine for tensile tests, while the glued emblem is secured to the movable part of the machine. In order to do this, a portion of the emblem is raised and fixed to grippers, a hole is formed with a larger diameter in the plastic part and with a smaller diameter in the emblem part and an instrument similar to a threaded screw is inserted, the head thereof making contact with the emblem and the shank passing though the emblem and being fixed to the test machine. Alternatively, it is possible to glue a shank provided with a head to the external surface of the emblem which is then fixed to the machine.

After fixing the two parts, these are pulled until complete separation, while measuring the maximum force value needed for separation, as well as the more or less rigid behaviour of the system.

Table 1 shows the data relating to the gripping force and the ratio between the gripping force and the surface area of the emblem and the amount of glue used, as measured by means of the destructive test described above in five samples representing some specific embodiments of the invention.

**Table 1**

| SAMPLE | Surface covered by glue | Gripping force (N) | Ratio between force and surface area (N/mm²) | Ratio between force and amount of glue (N/mm³) |
|---|---|---|---|---|
| 1 | 54% | 300 | 0.395 | 0.735 |
| 2 | 58% | 480 | 0.176 | 0.300 |
| 3 | 62% | 470 | 0.239 | 0.385 |
| 4 | 62% | 650 | 0.315 | 0.512 |
| 5 | 94% | 300 | 0.395 | 0.420 |

### EXAMPLES

The present invention will be described more clearly in the following non-limiting examples, which have the sole purpose of illustrating some specific embodiments of the invention.

### Example 1

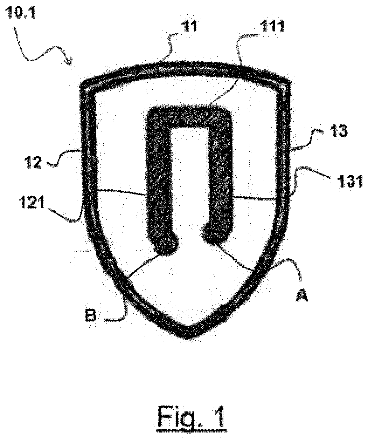

Figure 1 is a schematic drawing which shows the shape of the emblem used in Example 1 and the shape of the bead of glue used. The emblem has the shape of a substantially triangular shield, with a convex curved upper side and two convex curved sides which meet at a vertex.

The glue pattern shown in Figure 1 will be described starting from the right-hand bottom end (A) and proceeding in an anti-clockwise direction. The glue pattern has a first side which is substantially parallel to the convex curved right-hand side, a top side which is substantially parallel to the upper side of the shield, and a second side substantially parallel to the convex curved left-hand side.

One or more of the sides of the glue pattern may also be segmented.

As shown in Figure 1, the ends (A, B) of the glue pattern do not coincide. Preferably, a distance substantially corresponding to the width of the bead of glue is provided between the two ends of the glue pattern.

According to embodiments, the distance between the two ends (A, B) of the glue pattern may also be greater than the width of the bead of glue.

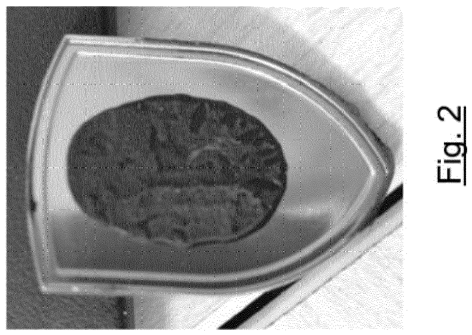

Table 1 shows the data relating to the gripping force and the ratio between the gripping force and the surface area of the emblem and the amount of glue used, as measured by means of the destructive test described above. Figure 2 shows the emblem and the residual glue at the end of this destructive test. As can be seen, the glue after gluing covers a portion of the surface of the emblem equal to about 50-60%. This percentage also depends on the concavity of the emblem and therefore may also be smaller or greater than this range.

### Example 2

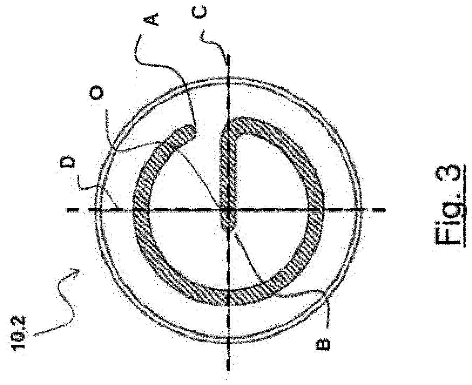

As shown in Figure 3, a circle-shaped emblem has been used in Example 2.

In this case, the glue pattern shown in Figure 3 is substantially in the shape of a G. For the sake of convenience, in Figure 3, two perpendicular diameters (C, D) dividing the emblem into four quadrants are shown. The glue pattern will be described starting from the top end A (top right-hand quadrant) and proceeding in an anti-clockwise direction. It follows a curved path substantially parallel to the circumference of the emblem up to the diameter C in the bottom right-hand quadrant, where it curves towards the centre O forming a segment substantially parallel to the diameter C. The end B may coincide with the centre of the circumference O or may be close thereto.

As shown in Figure 3, the end A is not situated on the diameter C. Preferably, a distance substantially corresponding to the width of the bead of glue is provided between the end A and the segment of the bead of glue which lies on the diameter C. According to embodiments, this distance may also be greater than the width of the bead of glue.

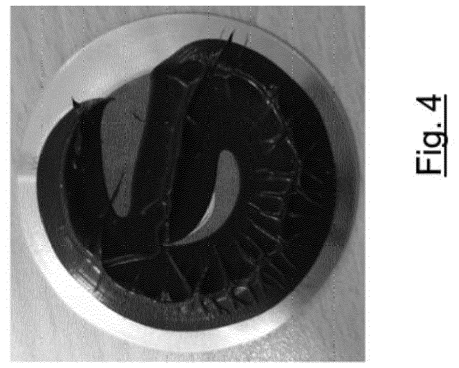

Table 1 shows the data relating to the gripping force and the ratio between the gripping force and the surface area of the emblem and the amount of glue used, as measured by means of the destructive test described above. Figure 4 shows the emblem and the residual glue at the end of this destructive test. As can be seen, the glue after gluing covers a portion of the surface of the emblem equal to about 55-65%. This percentage also depends on the concavity of the emblem and therefore may also be smaller or greater than this range.

### Example 3

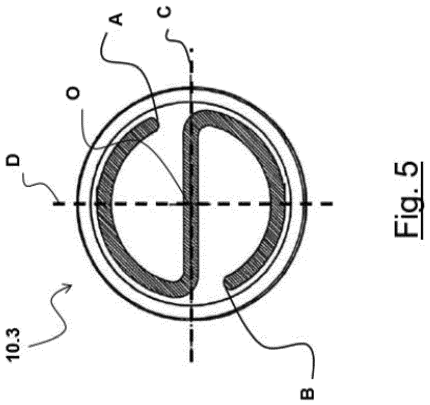

Figure 5 shows the circle-shaped emblem used in Example 3.

In this case, the glue pattern shown in Figure 5 is substantially in the shape of a S. For the sake of convenience, in Figure 5, two perpendicular diameters (C, D) dividing the emblem into four quadrants are shown. The glue pattern will be described starting from the top end A (top right-hand quadrant) and proceeding in an anti-clockwise direction. It follows a curved path, from the top right-hand quadrant to the top left-hand quadrant, substantially parallel to the circumference of the emblem up to the diameter C. Then it proceeds with a segment substantially parallel to the diameter C and continues along a curved path, from the bottom right-hand quadrant to the bottom left-hand quadrant, substantially parallel to the circumference of the emblem.

As shown in Figure 3, the ends A and B are not situated on the diameter C. Preferably, a distance substantially corresponding to the width of the bead of glue is provided between the ends A and/or B and the bead segment lying on the diameter C. According to embodiments, this distance may also be greater than the width of the bead of glue.

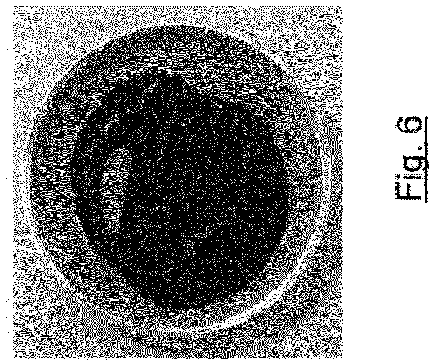

Table 1 shows the data relating to the gripping force and the ratio between the gripping force and the surface area of the emblem and the amount of glue used, as measured by means of the destructive test described above. Figure 6 shows the emblem and the residual glue at the end of this destructive test. As can be seen, the glue after gluing covers a portion of the surface of the emblem equal to about 60-70%. This percentage also depends on the concavity of the emblem and therefore may also be smaller or greater than this range.

### Example 4

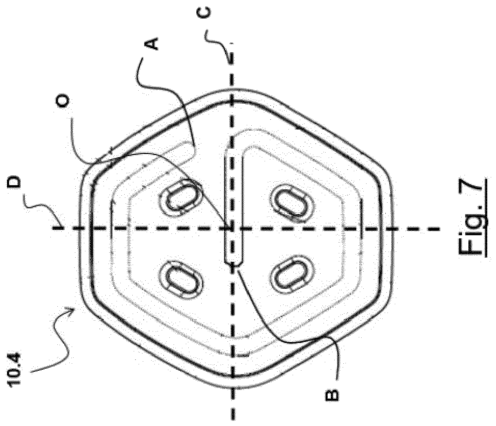

An emblem with a substantially hexagonal shape has been used in Example 4 (Fig.7).

In this case, the glue pattern shown in Figure 7 is substantially in the shape of a G. For the sake of convenience, in Figure 7, two perpendicular straight lines (A, C) dividing the emblem into four quadrants are shown. The glue pattern will be described starting from the top end A (top right-hand quadrant) and proceeding in an anti-clockwise direction. It follows a path with segments substantially parallel to each side of the hexagon, namely the perimeter of the emblem, up to the straight line C in the bottom right-hand quadrant, where it curves towards the centre O forming a segment substantially parallel to the straight line C. The end B may coincide with the centre of the circumference O, or may be close thereto.

As shown in Figure 7, the end A is not situated on the straight line C. Preferably, a distance substantially corresponding to the width of the bead of glue is provided between the end A and the segment of the bead of glue lying on the straight line C. According to embodiments, this distance may also be greater than the width of the bead of glue.

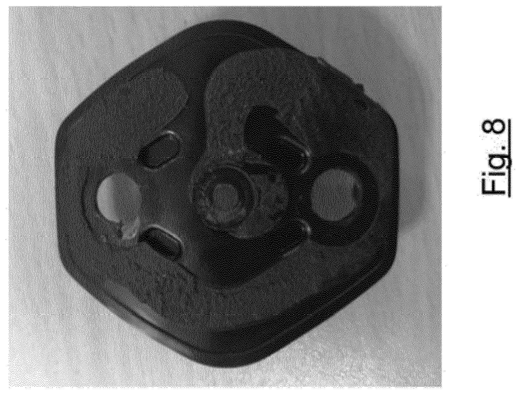

Table 1 shows the data relating to the gripping force and the ratio between the gripping force and the surface area of the emblem and the amount of glue used, as measured by means of the destructive test described above. Figure 8 shows the emblem and the residual glue at the end of this destructive test. As can be seen, the glue after gluing covers a portion of the surface of the emblem equal to about 60-70%. This percentage also depends on the concavity of the emblem and therefore may also be smaller or greater than this range.

### Example 5

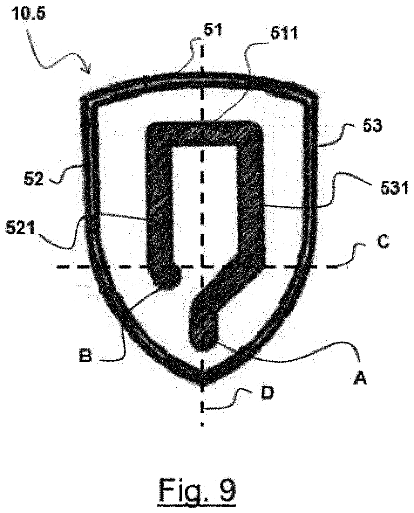

An emblem in the shape of a substantially triangular shield, with convex curved upper side and two convex curved sides which meet at a vertex, was used in Example 5 (Fig. 9).

In this case, the glue pattern shown in Figure 9 has a shape comparable to that of a question mark. For the sake of convenience in Figure 9, two perpendicular straight lines (C, D) dividing the emblem into four quadrants are shown. In particular, the straight line D divides the emblem longitudinally, passing through the vertex, while the straight line C divides the emblem horizontally passing through the point of curvature of the right-hand and left-hand sides.

The bead of glue will be described starting from the bottom point (A) and proceeding in an anti-clockwise direction. It comprises a first segment substantially parallel to the straight line D, a second oblique segment extending from the straight line D towards the straight line C, then a segment substantially parallel to the right-hand convex curved side, a top segment substantially parallel to the upper side of the shield, and finally a segment substantially parallel to the left-hand convex curved side.

As shown in Figure 9, the ends (A, B) of the bead of glue do not coincide. Preferably, a distance substantially corresponding to the width of the bead of glue is provided between the two ends (A, B) of the bead of glue. According to embodiments, the distance between the two ends (A, B) of the bead of glue may also be greater than the width of the bead of glue.

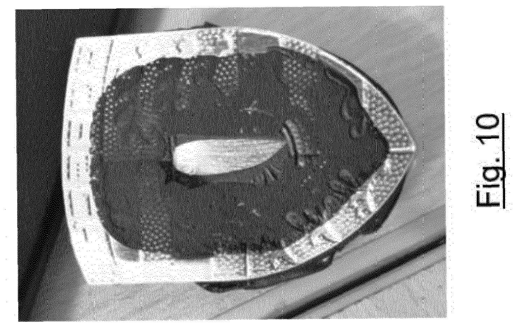

Table 1 shows the data relating to the gripping force and the ratio between the gripping force and the surface area of the emblem and the amount of glue used, as measured by means of the destructive test described above. Figure 10 shows the emblem and the residual glue at the end of this destructive test. As can be seen, the glue after gluing covers a portion of the surface of the emblem equal to about 90-96%. This percentage also depends on the concavity of the emblem and therefore may also be smaller or greater than this range.

## Claims

1. Process for fixing an emblem (10) on a cover of a motor-vehicle steering wheel, comprising the steps of:
a) loading a plurality of emblems (10) and a plurality of covers inside a fixing machine, wherein each emblem (10) comprises a visible surface and a rear surface and wherein each cover comprises an external surface and an internal surface;
b) providing an amount of glue for fixing an emblem (10) on a cover;
c) depositing the amount of glue on a rear surface of each emblem (10), and/or on each external surface of the covers, in the form of a bead along a predetermined path;
d) joining an emblem (10) to a corresponding cover;
e) pressing together each pair of emblem (10) and cover.

2. The process according to claim 1, wherein the bead of glue is defined by a continuous line comprising a plurality of segments.

3. The process according to claim 1 or 2, wherein the bead of glue is defined by a continuous line which does not form a closed loop.

4. The process according to claim 3, wherein the distance between each end (A, B) of the bead of glue and the portion of the bead closest to it is preferably equal to at least the width of the bead of glue itself.

5. The process according to any one of claims 1-4, wherein the bead of glue follows a path at least partially substantially parallel to the perimeter of the emblem (10).

6. The process according to claim 5, wherein, along the whole of its path, the bead of glue is placed at a distance from the edge of the emblem (10) equal at least to the width of the bead itself.

7. The process according to any one of claims 5-6, wherein the bead of glue follows a path comprising at least one stretch substantially parallel to an imaginary straight line (C) passing through the centre (O) of the emblem (10).

8. The process according to any one of claims 1-7, wherein the covers and the emblems (10) are produced using the same material or using materials different from each other.

9. The process according to any one of claims 1-8, wherein the emblems (10) are produced using materials selected from thermoplastic polyolefins (TPO), mixtures of polycarbonate (PC) and acrylonitrile-butadiene-styrene (ABS) copolymers, polycarbonate, aluminium, copper, acrylonitrile-butadiene-styrene copolymers, polyamide (Pa), polyester-polyether block thermoplastic elastomers, and mixtures thereof.

10. The process according to any one of claims 1-8, wherein the covers are produced using materials selected from thermoplastic polyolefins (TPO), reinforced polystyrene (TPS), vulcanized thermoplastic elastomers (TPV), and mixtures thereof.

11. The process according to any one of claims 1-10, wherein the glue is selected from the group comprising monocomponent glues based on modified silane polymers, bicomponent epoxy glues, bicomponent acrylic glues, monocomponent hydro-hardening glues, and mixtures thereof.

12. The process according to any one of claims 1-11, further comprising a step of pre-treatment of the surfaces to be glued.

13. The process according to claim 12, wherein the pre-treatment step involves one or more of the following treatments: priming, flaming, plasma treatment, mechanical cleaning, and cleaning with alcohol or solvents.

14. Cover of a motor-vehicle steering wheel, comprising an emblem (10) fixed to it by gluing the rear surface of the emblem (10) onto a portion of the external surface of the cover.
